**Europäisches Patentamt**

**European Patent Office**

**Office européen des brevets**

(11) Numéro de publication: **0 265 573 B1**

## FASCICULE DE BREVET EUROPEEN

(45) Date de publication de fascicule du brevet: **07.07.93** (51) Int. Cl.⁵: **G06F 15/20, B41J 3/26**

(21) Numéro de dépôt: **86430043.9**

(22) Date de dépôt: **30.10.86**

(54) **Procédé de transcription automatique sténotypie-français.**

(43) Date de publication de la demande:
**04.05.88 Bulletin 88/18**

(45) Mention de la délivrance du brevet:
**07.07.93 Bulletin 93/27**

(84) Etats contractants désignés:
**BE CH FR LI LU**

(56) Documents cités:
**EP-A- 0 179 214**
**WO-A-82/00442**
**FR-A- 2 542 888**
**US-A- 4 566 065**

**IRE TRANSACTIONS ON ELECTRONIC COM-PUTERS, April 1962, pages 187-199, New York, US; E.J. GALLI: "The stenowriter - A system for the lexical processing of stenoty-py"**

**Communications of the ACM, vol. 23, no. 12, December 1980, pages 676-687, New York, US.**

(73) Titulaire: **International Business Machines Corporation**
**Old Orchard Road**
**Armonk, N.Y. 10504(US)**

(84) Etats contractants désignés:
**BE CH LI LU**

(73) Titulaire: **Compagnie IBM FRANCE**
**5 Place Vendôme**
**F-75000 Paris 1er(FR)**

(84) Etats contractants désignés:
**FR**

(72) Inventeur: **Derouault, Anne-Marie**
**16 bis, rue Augereau**
**F-75007 Paris(FR)**
Inventeur: **Merialdo, Bernard**
**9, Boulevard des Bagaudes**
**F-94340 Joinville-le-Pont(FR)**

(74) Mandataire: **Vekemans, André**
**Compagnie IBM France Département de Propriété Intellectuelle**
**F-06610 La Gaude (FR)**

## Description

L'invention concerne un procédé de transcription automatique sténotypie-français et plus particulièrement un dictionnaire à clef structurée utilisé dans un tel procédé de transcription automatique.

La méthode de sténotypie actuellement utilisée en France permet de coder manuellement la parole sous une forme pseudo-phonétique à l'aide d'une machine comprenant un clavier de 21 touches.

Le principe de la méthode est de coder la parole syllabe par syllabe, chaque syllabe étant représentée par une frappe.

Un système de transcription automatique sténotypiefrançais réalise le passage d'une suite de syllabes sténotypées au texte écrit en français à l'aide d'un système informatique.

Du fait de l'existence en français de nombreuses homonymies et de confusions systématiques provenant de la méthode de codage, le nombre total d'orthographes possible correspondant à une suite de syllabes sténotypées donnée est souvent élevé.

Un système de transcription automatique doit donc inclure un dictionnaire sténotypie-français, emmagasiné dans une mémoire, permettant d'établir la correspondance entre les suites de syllabes sténotypées et les différentes orthographes possibles ainsi qu'un algorithme permettant de choisir parmi celles-ci. Ceci implique que le dictionnaire doit comporter autant d'entrées qu'il existe de transcriptions sténotypées pour un même mot. Cette multiplication des entrées entraîne une augmentation de la taille du dictionnaire et par conséquent de la mémoire.

L'article de J. PETERSON : "Computer Programs for Detecting and Correcting Spelling Errors", Communications of the ACM, Vol. 23, Décembre 1980, No. 12, décrit un procédé utilisé pour réduire la taille d'un dictionnaire utilisé dans un correcteur orthographique. Ce procédé consiste à ne mettre en mémoire que la racine des mots composés d'une racine et d'un affixe (préfixe, suffixe) ainsi qu'une liste des affixes possibles et à adjoindre à chaque mot du dictionnaire un "pointeur" vers les affixes valides pour ce mot.

Malheureusement ce procédé ne permet pas d'éviter la multiplication du nombre des entrées d'un dictionnaire sténotypie-français dues aux différentes formes sténotypées d'un même mot.

L'invention a pour objet un procédé permettant d'éviter la multiplication des entrées due aux différentes formes sténotypées d'un même mot dans un dictionnaire sténotypie-français grâce à l'utilisation d'une partition des syllabes sténotypées et d'un procédé de consultation d'un dictionnaire adapté à cette partition.

Ce procédé est caractérisé par la division de la syllabe en une partie fixe et une partie optionnelle conformément à la revendication 1.

L'invention sera mieux comprise et d'autres caractéristiques et avantages apparaîtront à l'aide de la description qui suit en référence aux figures annexées, parmi lesquelles :

La figure 1 représente le clavier d'une sténotype.

La figure 2 représente une bande de sténotypie.

La figure 3 représente un système informatique permettant de mettre en oeuvre le procédé de la présente invention.

La figure 4 représente de manière détaillée le circuit logique représenté à la figure 3.

La méthode de sténotypie utilisée en France, ainsi que dans la plupart des pays francophones, est la méthode Grandjean, décrite dans l'ouvrage : "Méthode de Sténotypie", Ed. Sténotype Grandjean.

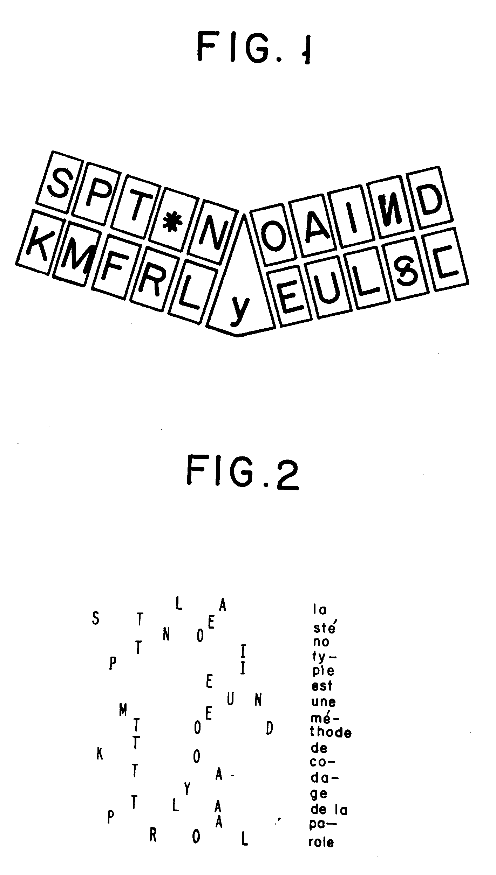

Cette méthode permet de coder manuellement la parole sous une forme pseudo-phonétique, à l'aide d'une machine dont le clavier est représenté à la figure 1.

Chaque touche commande l'impression d'un symbole sur une bande de papier. Cette bande comporte 21 colonnes et un même symbole s'imprime toujours dans la même colonne. Une frappe consiste à enfoncer simultanément plusieurs touches, ce qui provoque l'impression des caractères dans les colonnes correspondantes, sur une même ligne. Le fait de relâcher les touches provoque l'avancement de la bande de papier à la ligne suivante. La figure 2 représente une bande de sténotypie portant l'enregistrement d'une phrase.

Le principe de la méthode est de coder la parole syllabe par syllabe, chaque syllabe étant représentée par une frappe. Les 11 touches de gauche (de S à Y) correspondent aux consonnes initiales de la syllabe, avec certaines confusions de sons :

"S" = se, ze "P" = pe, be "T" = te, de "K" = que, gue "F" = fe, ve.

Les groupes consonantiques br, bl, tr... sont obtenus en appuyant simultanément sur plusieurs touches ("PR", "PL", "TR"...).

La touche "Y" sert à la fois pour le son je et pour la semi-voyelle y.

Les 5 touches "O" à "I" servent à coder les voyelles. "E" représente les sons é, è. "A" représente les sons a,â . "O" représente les sons o, ô. Le e muet est omis. Des combinaisons sont permises : "EU" pour

2

eu, "OU" pour ou, "OI" pour oi ... Les 5 touches de droite (de "L" à "(") forment les consonnes finales avec les confusions:

"L" = le, re "N" = nasales "s" = se, ze, fe, ve "D" = te, de "(" = que, gue.

De plus, des conventions autorisent certaines contractions de syllabes, et définissent l'écriture de syllabes usuelles, dans le but de diminuer le nombre de frappes nécessaires, et donc d'augmenter la vitesse de saisie.

Il n'y a pas de coupure entre les mots, ni en général de virgules. Seules les fins de phases sont marquées, par le symbole "*" ou "P*" représentant le point.

L'inconvénient majeur est le temps nécessaire à la retranscription depuis la bande sténotypée jusqu'au texte écrit, demandant 5 à 7 h de travail pour 1 h de parole. La lecture par la sténotypiste d'une bande sténo est relativement rapide, mais la dactylographie du texte constitue la partie la plus longue et la plus ennuyeuse du travail.

L'importance du temps de traitement manuel permet de penser que l'utilisation d'un système informatique pourrait être bénéfique. Le travail de la sténotypiste passerait d'un travail de dactylographie à un travail de correction d'erreurs et d'édition d'un texte.

L'article de A.M. DEROUALT, B. MERIALDO, J-L. STEHLE: "Une expérience de transcription automatique sténotypie-français", Technique et Science Informatique, Vol. 2, No 5, Septembre 1983, décrit un système de transcription automatique sténotypie - français qui réalise le passage des syllabes sténotypées au texte écrit en français. L'entrée est donc constituée d'une suite de syllabes sténotypées. Une recherche dans un dictionnaire sténotypie-français permet de trouver les mots dont la transcription sténotypée figure sur la bande, puis de reconstruire toutes les phrases ayant cette sténotypie correspondant à des orthographes différentes.

L'existence d'orthographes différentes est due à trois phénomènes:
- les homonymies, par exemple : "marche, "marches", "marcher",...
- les confusions systématiques provenant de la méthode : "tout", "doux" ou "barre", "balle"
- les différentes coupures possibles en mots, par exemple : "au-delà" et "eau de la".

Le procédé, objet de la présente invention, permet de limiter le nombre d'entrées au dictionnaire résultant des variations de la forme sténotypée d'un mot propres à la méthode de sténotypie.

En effet, dans cette méthode, plusieurs syllabes peuvent être codées à l'aide des mêmes touches, par exemple :

POL = "port" ou "bord"

Toutefois, l'utilisation de l'astérisque "*" permet de lever l'ambiguïté.

POL = "port"
P*OL = "bord"

Malheuresement, l'utilisation de l'astérisque n'est pas obligatoire. Certaines sténotypistes l'utilisent toujours, d'autres jamais. Même lorsqu'elles l'utilisent, cette utilisation n'est pas systématique (même au niveau d'un seul mot). Par exemple:

F*I SYON

pour "vision" au lieu de:

F*I S*YON

conformément à la règle.

Pour tenir compte de cette situation, le dictionnaire devrait donc inclure les 4 sténotypies possibles:

FI SYON     (qui est aussi la forme sténotypée du mot "fission")
F*I SYON    (qui est aussi la forme sténotypée du mot "fission")
FI S*YON    (qui est aussi la forme sténotypée du mot "fission")
F*I S*YON   (qui est aussi la forme sténotypée du mot "fission")

du mot "vision":

Conformément à l'invention, la multiplication des entrées du dictionnaire est évitée grâce à une partition des syllabes sténotypées figurant dans le dictionnaire ainsi qu'à un procédé de consultation particulier.

Chaque syllabe sténotypée est divisée en 2 parties:

- une partie fixe $F_D$ , de type chaine de caractères, correspondant à la syllabe sténotypée sans l'astérisque,
- une partie optionnelle $O_D$ , de type valeur logique, la valeur 1 signifiant que la syllabe peut être tapée avec un astérisque, la valeur 0 signifiant que la syllabe ne peut pas être tapée avec un astérisque.

Une entrée du dictionnaire correspond à une suite de syllabes sténotypées (par exemple k syllabes), et on lui associe la suite des parties fixes $F_D(i)$ i = 1, 2...k de ces syllabes, ainsi que la suite des parties optionnelles $O_D(i)$ i = 1, 2...k.

Par exemple:

$F_D$ (1) = FI    $F_D(2)$ = SYON
$O_D$ (1) = 1    $O_D(2)$ = 1

Le dictionnaire est donc codé sous la forme :

```
        POL      0.          port
                 1.            bord


        FI SYON 11.          vision
                 00.          fission
```

Le procédé de consultation de ce nouveau dictionnaire doit tenir compte de la structure nouvelle des entrées. Pour cela la séquence des syllabes sténotypées tapées au clavier est décomposée de la même manière. Chaque syllabe sténotypée tapée est décomposée en:
- une partie fixe $F_T$ , de type chaine de caractères, correspondant à la syllabe sténotypée sans l'astérisque,
- une partie optionnelle $O_T$ , de type logique, la valeur 1 signifiant que la syllabe a eté tapée avec un astérisque, la valeur 0 signifiant que la syllabe a été tapée sans astérisque.

Le procédé de consultation consiste alors à trouver les entrées du dictionnaire telles que :
- la suite de parties fixes $F_D(i)$ de l'entrée coïncide avec la suite des parties fixes des syllabes tapées $F_T(i)$, soit la condition :

$F_T(i) = F_D(i)$ pour toutes les i = 1, 2... k

- les parties optionnelles $O_D(i)$ de l'entrée soient compatibles avec les parties optionnelles tapées $O_T(i)$ correspondantes. La condition de compatibilité s'exprime de la façon suivante :

$O_T(i) \Rightarrow O_D(i) = 1$ pour toutes les i = 1, 2... k .

Ceci revient à dire que si l'on a tapé un astérisque dans une syllabe, seules les entrées autorisant l'astérisque dans cette syllabe sont retenues. Si l'on n'a pas tapé un astérisque dans une syllabe, toutes les entrées satisfaisant à la première condition peuvent être retenues. La condition de compatibilité peut être formalisée logiquement par l'implication :

$O_T(i) \Rightarrow O_D(i) = 1$ pour toutes les i = 1, 2... k

ou avec une notation équivalente :

$O_D (i) \lor \neg O_T(i) = 1$ pour toutes les i = 1, 2.... k

En pratique, le procédé objet de la présente invention peut être mis en oeuvre à l'aide d'un ordinateur personnel (par exemple, un ordinateur personnel IBM).

L'ordinateur permet de réaliser les différentes étapes permettant d'obtenir, à partir d'une suite de syllabes sténotypées, le texte final. Ces étapes sont les suivantes:
- emmagasinage des formes sténotypées tapées dans une mémoire,
- création ou modification du dictionnaire utilisateur (noms propres) pour cette transcription,

4

- transcription automatique des syllabes sténotypées, de manière à fournir une première version du texte,
- correction manuelle du texte à l'aide d'un programme de traitement de texte,
- impression du texte définitif.

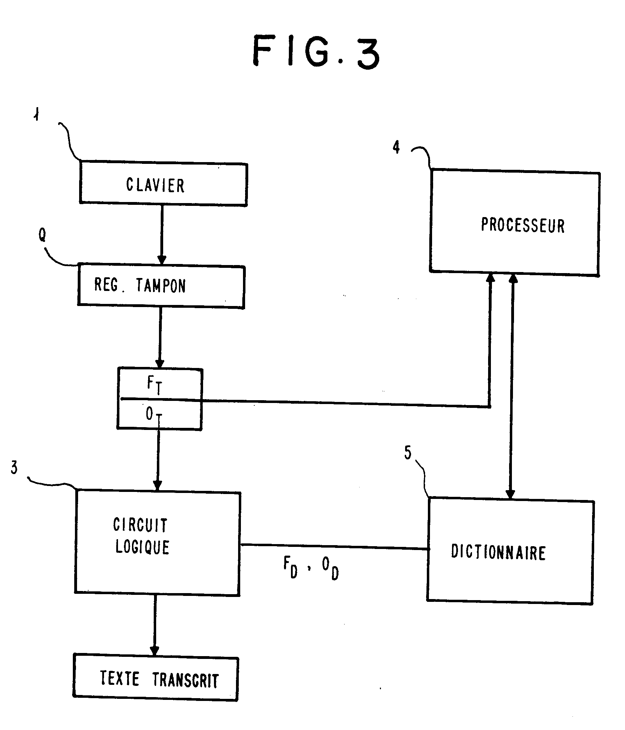

Nous nous référerons à la figure 3 pour décrire la manière dont un texte est transcrit automatiquement dans une réalisation hardware.

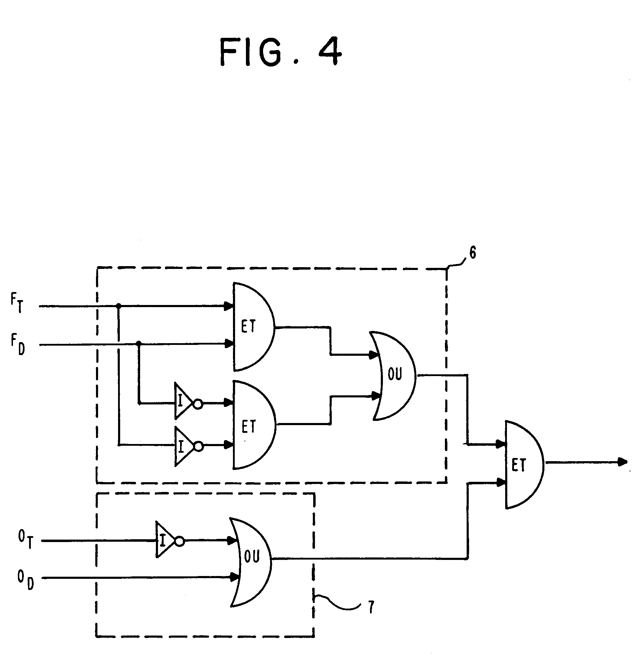

La sténotypiste tape le texte sur un clavier dont les touches sont reliées à des contacts électriques permettant d'engendrer des signaux codés correspondant aux 21 touches du clavier. Les signaux résultant de la frappe sont d'abord emmagasinés dans un registre tampon 2, d'où ils sont appliqués à un circuit logique 3 après avoir été divisés en une partie $E_T$ et une partie optionnelle $O_T$, par l'intermédiaire du microprocesseur 4, conformément à ce qui a été décrit plus haut. Le circuit logique 3, représenté à la figure 4, qui peut être réalisé per logiciel dans l'ordinateur personnel mentionné ci-dessus, permet la consultation du dictionnaire 5 de manière à en extraire les entrées pour lesquelles les deux relations suivantes :

$F_T(i) = F_D(i)$ pour toutes les i = 1, 2... k

$O_T(i) \Rightarrow O_D(i) = 1$ pour toutes les i = 1, 2... k

sont vérifiées.

Le circuit 6 permet de vérifier la première relation et le circuit 7 permet de vérifier la deuxième relation. La sortie du circuit 3 constitue le texte transcrit.

En pratique, le dictionnaire est créé à l'avance et emmagasiné dans la mémoire du système. Les accès au dictionnaire se font directement en utilisant des tables en mémoire.

Le procédé de la présente invention peut également être appliqué à la transcription des lettres accentuées (par exemple, lorsque le clavier ne comporte pas les lettres accentuées). Dans ce cas la partie fixe sera constituée par la lettre sans accent et la partie optionnelle constituée par autant de code qu'il y a de caractères.

**Revendications**

1. Procédé de transcription automatique sténotypie en langue française dans lequel les syllabes sténotypées correspondant au texte d'un discours sont comparées séquentiellement aux entrées d'un dictionnaire de manière à obtenir la transcription en français du texte original, procédé caractérisé en ce qu'il comporte les étapes suivantes:
   - décomposer chaque syllabe sténotypée tapée en une partie fixe $F_T$ de type chaîne de caractères, correspondant à la syllabe sténotypée et une partie optionnelle $O_T$ constituée par une valeur logique 1 ou 0, selon que la syllabe a été tapée avec une caractéristique supplémentaire ou non;
   - décomposer la sténotypie de chaque entrée du dictionnaire en une suite de syllabes sténotypées, ayant chacune une partie fixe $F_D(i)$ et une partie optionnelle $O_D(i)$, constituée par une valeur logique 1 ou 0 selon que la syllabe peut être tapée avec une caractéristique supplémentaire ou non,
   - trouver les entrées du dictionnaire dont la suite des parties fixes coïncide avec la suite des parties fixes tapées :

   $F_T(i) = F_D(i)$ pour toutes les i = 1, 2...k

   - choisir parmi elles celles qui vérifient également la condition de compatilité des parties optionnelles:

   $O_T(i) \Rightarrow O_D(i) = 1$ pour toutes les i = 1, 2... k

2. Procédé de transcription automatique sténotypie français selon la revendication 1 caractérisée en ce que la dite caractéristique supplémentaire est representée per l'astérisque.

**Claims**

1. A method for the automatic transcription of French machine stenography in which the stenotyped syllables corresponding to the text of a speech are compared in sequence to the entries in a dictionary, so as to obtain the French transcription of the original text, said process being characterized in that it includes the following steps:

- breaking down each machine stenographed syllable into a fixed part $F_T$ of the character-string type, corresponding to the machine stenographed syllable, and an optional part $O_T$ comprised of a logic value 1 or 0, depending on whether the syllable was typed with a complementary characteristic or not,
- breaking down the machine stenography of each dictionary entry into a sequence of machine stenographed syllables, each presenting a fixed part $F_D$ (i) and an optional part $O_D$ (i) comprised of a logical value 1 or 0 depending on whether the syllable can be typed with a complementary characteristic or not;
- searching for the dictionary entries whose sequence of fixed parts matches the sequence of typed fixed parts:

$F_T(i) = F_D(i)$ for all entries $i = 1, 2...k$

- selecting amongst them the entries for which the compatibility condition of the optional parts is also valid:

$O_T(i) \Rightarrow O_D(i) =$ for all entries $i = 1, 2...k$

2. A method for automatic transcription of French machine stenography as claimed in the above Claim 1, characterized in that said complementary characteristic is represented by the asterisk character.


**Patentansprüche**

1. Verfahren zur automatischen Umschreibung von Maschinenstenographie in französischer Sprache, bei dem die stenographischen Silben, die dem Text einer Rede entsprechen, sequentiell mit den Einträgen in einem Wörterbuch verglichen werden, so daß die französische Umschreibung des Originaltextes erhalten wird, wobei das Verfahren dadurch gekennzeichnet ist, daß es die folgenden Schritte umfaßt:

- Zerlegen jeder getippten stenographischen Silbe in einen feststehenden Teil $F_T$ vom Typ Zeichenkette, welcher der stenographischen Silbe entspricht, und einen fakultativen Teil $O_T$, der durch einen logischen Wert 1 oder 0 dargestellt wird, je nachdem ob die Silbe mit einem zusätzlichen Kennzeichen getippt wurde oder nicht;
- Zerlegen der Maschinenstenographie jedes Wörterbucheintrags in eine Folge stenographischer Silben, wobei jede einen feststehenden Teil $F_D(i)$ und einen fakultativen Teil $O_D(i)$ aufweist, welcher durch einen logischen Wert 1 oder 0 dargestellt wird, je nachdem ob die Silbe mit einem zusätzlichen Kennzeichen getippt werden kann oder nicht,
- Auffinden der Wörterbucheinträge, bei denen die Folge der feststehenden Teile mit der Folge der getippten feststehenden Teile übereinstimmt:

$F_T(i) = F_D(i)$ für alle $i = 1, 2...k$

- Auswählen unter denjenigen, welche die Bedingung der Vereinbarkeit mit den fakultativen Teilen erfüllen:

$O_T(i) \Rightarrow O_D(i)$ für alle $i = 1, 2...k$

2. Verfahren zur automatischen Umschreibung von französischer Maschinenstenographie nach Anspruch 1, dadurch gekennzeichnet, daß das zusätzliche Kennzeichen durch das Sternchen repräsentiert wird.

# FIG. 1

# FIG.2

# FIG. 3

# FIG. 4